# EUROPEAN PATENT APPLICATION

(11) **EP 4 559 358 A1**
(43) Date of publication of application: **28.05.2025**
(21) Application number: 24214940.9
(22) Date of filing: 22.11.2024
(51) Int. Cl.: A45D 40/26

(54) **APPLICATION DEVICE**

(30) Priority: 23.11.2023 IT 202300024870
(71) Applicant: COSMEI S.r.L., 26013 Crema (CR) (IT)
(72) Inventor: CICCHETTI, Michele, 26025 Pandino (Cremona) (IT); ACERBI, Matteo, 26013 Crema (IT)
(74) Representative: Lunati & Mazzoni S.r.L.

(57) **Abstract**

Device (1) for the application of a product (10), comprising: a container (2) suitable for containing the product (10) and defining a first opening (20) and a longitudinal axis (1a); a closure portion (3) configured to reversibly close the first opening (20); a rod (4) defining a first end (40) integral with the closure portion (3) and a second end (41) opposite the first end (40), comprising an applicator (42); the container (2) and the closure portion (3) respectively define a first interface surface (2a) and a second interface surface (3a) mutually opposed when the closure portion (3) closes the first opening (20); constraint means (5) configured to reversibly constrain the container (2) and the closure portion (3); the constraint means (5) achieve an interlock when the closure portion (3) closes the first opening (20);
the device (1) comprises a gasket (6) designed to press the interface surfaces (2a, 3a) along a portion wherein the interface surfaces (2a, 3a) are mutually parallel and form an angle (α) of less than 30° with the longitudinal axis (1a), and the constraint means (5) are distinct from the gasket (6).

## Description

The present invention relates to an application device of the type specified in the preamble of the first claim.

The subject of this invention is an application device primarily, but not exclusively, used in the cosmetic and pharmaceutical fields.

Currently, containers are known for storing products in powder, liquid phase, or dispersions, primarily used for application on body parts. These types of products, therefore, can be employed in cosmetics or pharmaceuticals. A typical example of a cosmetic product is mascara.

In particular, a class of containers used in this field includes an applicator, whose function is to facilitate the application of the product to the body part it is intended for. The applicator can consist of a rod at the end of which a brush or a tool suitable for application, or applicator, of the product to the intended body part is placed. Therefore, the container serves not only the function of holding the cosmetic product but also ensures that the applicator is immersed in the product. Typically, applicators include bristles protruding from the end of the rod immersed in the product.

These applicator containers also allow for a reduction in the amount of product present on the bristles at the time of application. They may include a flexible element at the mouth where the applicator is inserted, which it passes through when being removed from the container. Through contact with this element, part of the product is removed from the applicator therefore a partial product dosage effect is achieved during applicator extraction.

The known technique described herein has some significant drawbacks. Specifically, the containers for cosmetic product applicators do not allow a compromise between a closure mechanism, that is simple to operate, and adequate confinement of the product from the external environment when the container is closed, leading to a risk of product alteration even when the container is closed.Given this situation, the technical task underlying the present invention is to design an application device capable of substantially overcoming at least some of the aforementioned drawbacks.

As part of this technical task, an important aim of the invention is to provide an application device capable of achieving an effective closure mechanism.

Another important aim of the invention is to create an application device with a closure mechanism that is easy to use.

The technical task and the specified aims are achieved by an application device as described in the annexed claim 1.

Preferred technical solutions are highlighted in dependent claims.

The features and advantages of the invention will become clearer from the detailed description of preferred embodiments of the invention, with reference to the accompanying drawings, wherein:

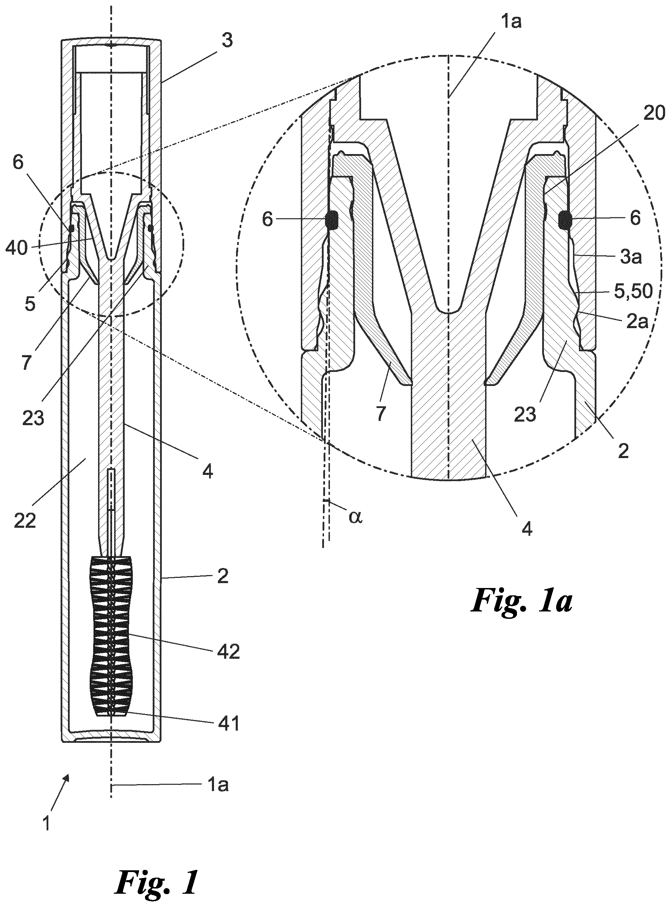

**Figure 1** shows a longitudinal section of an application device according to the invention;
**Figure 1a** shows an enlarged view of a part of Figure 1;

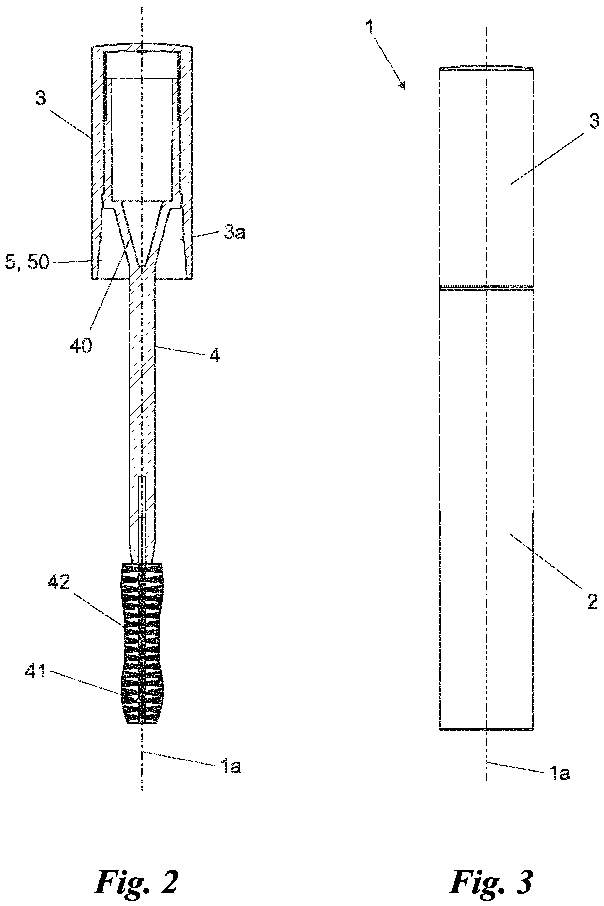

**Figure 2** illustrates a longitudinal section of a portion of an application device according to the invention; and
**Figure 3** is a side view of an application device according to the invention.

In this document, dimensions, values, shapes, and geometric references (such as perpendicularity and parallelism) associated with terms like "approximately" or similar expressions, such as "substantially" or "essentially", are to be understood as allowing for measurement errors or inaccuracies due to production and/or manufacturing errors, and especially as permitting slight deviations from the value, dimension, shape, or geometric reference associated with the term. For example, such terms, when associated with a value, preferably indicate a deviation not exceeding 10% of the value itself.

Additionally, when terms like "first", "second", "upper", "lower", "main", and "secondary" are used, they do not necessarily identify an order, priority relationship, or relative position but may simply be used to more clearly distinguish between different components.

Unless otherwise specified, as evident from the discussions below, terms like "processing", "computing", "determining", or " computation" refer to actions and/or processes of a computer or similar electronic computation device that manipulates and/or transforms data represented as physical quantities such as electronic magnitudes of records of a computing system and/or memories into other data similarly represented as physical quantities within computer systems, records, or other storage, transmission, or information display devices. Measurements and data presented in this document are considered, unless otherwise indicated, to be performed under International Standard Atmosphere conditions (ICAO, ISO 2533:1975).

With reference to the Figures, the device according to the invention is generally denoted by number **1.** It is a device for applying a product **10.** The product 10 can be a cosmetic or a substance in the form of a dispersion of solid particles in a liquid or of a liquid. An example of product 10 may be mascara. Therefore, device 1 can be used to apply product 10 to a part of the body. For example, if product 10 is mascara, it is applied to eyelashes.

Device 1 serves both the function of containing product 10 and enabling its application to the body.

In particular, device 1 comprises a container **2,** which is suitable for containing the product 10. Additionally, it defines a first opening **20,** which serves as access to the internal part of container 2. Container 2 defines a longitudinal axis **1a,** which may correspond to the predominant axis of development of device 1.

In some embodiments, the device 1 has a cylindrical shape, and longitudinal axis 1a coincides with the cylinder axis.

In detail, preferably, container 2 defines a cavity **22,** which corresponds to the internal space of container 2 wherein product 10 is housed. Container 2 preferably comprises an opening portion **23** with a cross-section perpendicular to longitudinal axis 1a that is smaller in size than the cross-section perpendicular to longitudinal axis 1a of cavity 22. Therefore, opening portion 23 may function as a narrow opening of container 2.

Accordingly, indeed the first opening 20 can be placed at the opening portion 23. Device 1 includes a closure portion **3,** which is configured to reversibly close the first opening 20. Thus, it serves the dual purpose of closing the first opening 20 and that of a portion removable by a user.

Device 1 can therefore adopt a closed configuration when the first opening 20 is closed. Additionally, the device 1 can adopt an open configuration when the closure portion 3 is separated from the first opening 20, leaving it uncovered.

The device 1 includes a rod **4,** which preferably develops predominantly along the longitudinal axis 1a. In some embodiments of the device 1 the rod 4 may have an axis coinciding with the longitudinal axis 1a.

Specifically, the rod 4 defines a first end **40,** which is integral with the closure portion 3. Therefore, when the closure portion is moved, the rod 4 moves with it. In particular, during the transition to the open configuration, the closure portion and rod 4 are moved away from container 2 and the first opening 20.

Rod 4 defines a second end **41,** opposite the first end 40. When device 1 is in the closed configuration, the second end 41 is inserted inside the container 2. In detail, it is housed within the cavity 22. Since product 10 is contained within cavity 22, the second end 41 is immersed in product 10 when device 1 is in the closed configuration.

To this end, the second end 41 comprises an applicator **42,** which is an element integral with the second end 41 and designed to collect and partially retain product 10. For instance, applicator 42 may include bristles. It is therefore immersed in product 10 when the device 1 is in the closed configuration. When the device 1 transitions to the open configuration, applicator 42 serves the function of carrying the collected product 10 to the body part where the product 10 is to be applied. Device 1 preferably includes a removal element **7,** designed to allow rod 4 to pass through and clean applicator 42 during this passage. The removal element 7 may, for example, be a wiper.

Thus, it can include two through openings at its opposite ends. Rod 4 can pass through these two through openings.

The removal element 7 may be made of flexible material to ensure interaction with the applicator 42 that avoids interaction that can damage the rod 4. Specifically, the removal element 7 can be made of elastomeric material, allowing it to elastically deform and facilitate the extraction of the rod 4 and applicator 42 from the container 2. The removal element 7 ensures that the portion of the applicator 42 that comes into contact with the product 10 is cleaned after the flexible end passes through the removal element corresponding to the edge of the opening of the removal element 7 placed inside the container and which, therefore is the first one to implement an interaction with the applicator 42 when it is removed from the container 2. This partial cleaning of the applicator 42 occurs during the extraction of the rod 4, preventing an excess of product 10 from accumulating on the applicator 42 and ensuring that product 10 thereon is evenly distributed on the applicator 42.

To this purpose the removal element 7 is preferably constrained at the first opening 20. Specifically, the removal element 7 can be secured at the edge of the opening opposite the one inside the container 2. In some embodiments of the device 1, the removal element 7 may have the opening inside the container 2 sized smaller than the opening constrained to the first opening 20. Thus, in this embodiment, the applicator 42 is cleaned after interacting with the opening placed inside the container 2. The removal element 7 may have a cylindrical symmetry and the two openings may be respectively centred on the longitudinal axis 1a.

Container 2 defines a first interface surface **2a.** In one embodiment of device 1, the first surface 2a is the farthest from longitudinal axis 1a and may face outward.

Additionally, the closure portion 3 defines a second interface surface **3a,** which may be the surface closest to longitudinal axis 1a of the closure portion 3. The first surface 2a and the second surface 3a are mutually opposed when the closure portion 3 closes the first opening 20.

In an exemplary embodiment, the first surface 2a and the second surface 3a may be parallel to the longitudinal axis 1a.

The device 1 includes constraint means **5,** configured to reversibly constrain the container 2 and the closure portion 3. For example, the constraint means may include protruding portions directed toward the longitudinal axis 1a and counter-shaped protruding portions on the opposite surface, forming a constraint between the first surface 2a and the second surface 3a.

The constraint means 5 advantageously achieve an interlock when closure portion 3 closes the first opening 20. Once the device 1 is in the closed configuration, it remains in this configuration unless a pulling force is applied along the direction of longitudinal axis 1a to separate the closure portion 3 from the container 2, transitioning to the open configuration. Additionally, the interlock mechanism allows for simpler structures for the container 2 and the closure portion 3, making them advantageously easier to replicate.

Constraint means 5 are preferably placed at the opening portion 23. Furthermore, the reversible interlock is formed between opening portion 23 and closure portion 3. In this way, the closure portion 3 can be reversibly interlocked with the closure portion 23. In some embodiments of device 1, this interlock shape may also cause the area where opening portion 23 joins the rest of container 2 to form a surface oriented in such a way that it contacts the end of closure portion 3.

The constraint means 5 preferably include closure elements **50,** which are elements protruding from both interface surfaces 2a and 3a. Closure elements 50 preferably protrude toward longitudinal axis 1a.

Specifically, closure elements 50 protruding from the first interface surface 2a and the closure elements 50 protruding from the second interface surface 3a can be positioned relative to one another, along the direction of longitudinal axis 1a, so that they are misaligned with respect to longitudinal axis 1a and prevents relative translation between closure portion 3 and container 2 along longitudinal axis 1a due to the interaction between closure elements 50.

The device 1 further advantageously includes a gasket **6,** designed to press interface surfaces 2a and 3a along a portion wherein the interface surfaces 2a and 3a are mutually parallel. Therefore, it ensures a sealed closure when device 1 is in the closed configuration. This seal prevents gas from flowing into the cavity 22 from the outside, which could otherwise alter product 10 stored therein. The presence of gasket 6 thus improves the durability of product 10.

The gasket 6 preferably includes an elastomeric material element. This material actually enables, thanks to the elastic deformations to which it can be subjected, to effectively fill gaps to be closed when device 1 is in the closed configuration and preventing effectively gas flow from the outside. For instance, the gasket 6 may be made of rubber.

The gasket 6 can also be housed in a groove extending perpendicularly to the longitudinal axis 1a. For example, it may be made along the first interface surface 2a. This allows gasket 6 to advantageously effectively perform its sealing function while avoiding causing an obstruction that may hinder the transition between open and closed configurations and vice versa.

Additionally, the gasket 6 is preferably integral with the container 2, reducing the risk of detachment of the gasket 6 from the container 2 consequently being unable to ensure reliable sealing. For instance, gasket 6 may be integrally constrained to the groove where it is housed.

Alternative configurations of device 1 are possible wherein the gasket 6 may be constrained to the closure portion 3 and housed in a groove made along the second interface surface 3a.

Gasket 6 preferably includes an O-ring. This type of gasket 6 ensures that an effective seal is achieved, particularly for the embodiments of the device 1 having cylindrical symmetry with an axis coinciding with longitudinal axis 1a. Therefore, an O-ring can advantageously be housed in an annular shaped groove.

Specifically, first interface surface 2a and second interface surface 3a define an angle α with longitudinal axis 1a. This angle is preferably less than 30°, even more preferably less than 20°, and most preferably less than 10°. These inclinations facilitate partial mutual deformation of closure portion 3 and opening portion 23 during the transition from the first to the second configuration, improving the interlock effect. Furthermore, the deformation effect resulting from the inclination of the interface surfaces 2a and 3a ensures that the seal 6 achieves a more effective sealing action. In fact, the gasket 6 is pressed more forcefully compared to a configuration wherein the two interface surfaces are parallel to the longitudinal axis 1a. The constraint means 5 are advantageously distinct from gasket 6. This separation advantageously ensures that the interlocking and sealing functions are both performed effectively. Specifically, if constraint means 5 do not coincide with gasket 6, the degradation of the gasket will not affect the efficacy of the interlocking mechanism. Similarly, any loss of interlocking effectiveness in constraint means 5 will not compromise the sealing effect of the gasket 6.

In detail, gasket 6 is preferably spaced apart from the constraint means 5 along longitudinal axis 1a. This spacing advantageously ensures that the two effects are carried out separately and effectively during the transition to the closed configuration. For example, with reference to the closed configuration, constraint means 5 can be placed farther from the first opening 20 than gasket 6. This arrangement enhances the sealing efficiency of gasket 6, as its closer position to the first opening 20 allows the gasket 6 to be compressed more effectively, aided by the local deformation of closure portion 3 caused by the inclination (α) of interface surfaces 2a and 3a.

The operation of device 1, previously described in structural terms, is as follows: When closure portion 3 and rod 4 integral with it are separated from container 2, the device is in the first configuration. When the device 1 is in this configuration, the product 10 can be applied to a user's body using applicator 42. In this configuration, the first opening 20 is open.

When transiting to the closure configuration, the closure portion 3 is moved to a position where it covers and seals the first opening 20. During the transition from the open configuration to the closed configuration, the rod 4 passes through first opening 20 and crosses the openings of the removal element 7. Closure portion 3 slides longitudinally along axis 1a. As rod 4 slides into the container 2, specifically into the cavity 22, applicator 42 becomes immersed in product 10.

Closure is achieved when opening portion 23 and closure portion 3 interact via their respective interface surfaces 2a and 3a. At the interface surfaces 2a and 3a, constraint means 5, through protruding interlocking elements 50, create a reversible interlock. During closure, gasket 6 is compressed between interface surfaces 2a and 3a, creating a sealing effect when the device is in the closed configuration. This effect is further enhanced by the spacing between gasket 6 and constraint means 5 along longitudinal axis 1a, as well as the partial and localized deformation caused by the inclination of the interface surfaces 2a and 3a relative to longitudinal axis 1a. The described device 1 achieves significant advantages.

In fact, device 1 enables the implementation of an effective closure mechanism, as it is not combined with the gasket and therefore does not experience changes in closure efficiency due to potential changes of the gasket itself.

Moreover, the sealing effect is made more efficient by being separated from the closure mechanism. Additionally, the inclination of the surfaces that achieve the interlock through the mutual interaction of the constraint means further enhances the sealing by the application of additional pressure to the gasket, resulting in its deformation.

Finally, device 1 has the advantage of facilitating the use of the device in terms of opening and closing operations. Indeed, the interlocking mechanism eliminates the need for rotational movements to perform opening or closing operations. Actually, only the linear translation of the closure portion and the container 2 along the longitudinal direction is required. Therefore, device 1 proves advantageous as it manages to combine ease of use with an effective sealing effect, ensuring the preservation of the product contained within the container and improving its durability.

The invention is open to variations within the scope of the inventive concept defined by the claims.

Within this scope, all the parts may be replaced with equivalent elements, and materials, shapes, and dimensions may be any.

## Claims

1. Device (1) for applying a product (10) comprising:
- a container (2) suitable for containing said product (10) and defining a first opening (20) and a longitudinal axis (1a),
- a closure portion (3) configured to reversibly close said first opening (20),
- a rod (4) defining a first end (40) integral with said closure portion (3) and a second end (41) opposite said first end (40) and comprising an applicator (42),
- said container (2) and said closure portion (3) respectively defining a first interface surface (2a) and a second interface surface (3a) mutually opposed when said closure portion (3) closes said first opening (20),
- constraint means (5) configured to reversibly constrain said container (2) and said closure portion (3);
and **characterized in that:**
- said constraint means (5) achieve an interlock when said closure portion (3) closes said first opening (20);
- said device (1) comprising a seal (6) suitable for pressing said interface surfaces (2a, 3a) along a portion in which said interface surfaces (2a, 3a) are reciprocally parallel and define with said longitudinal axis (1a) an angle (α) of less than 30°,
- said constraint means (5) being distinct from said seal (6).

2. Device (1) according to claim 1, wherein said sealing means (6) comprise an elastomeric material element.

3. Device (1) according to claim 1, wherein said gasket (6) comprises an o-ring.

4. Device (1) according to any of the previous claims, wherein said gasket (6) is spaced from said constraint means (5) along said longitudinal axis (1a).

5. Device (1) according to any of the previous claims, comprising a removal element (7) suitable for allowing passage of said rod (4) and cleaning said applicator (42) during said passage.

6. Device (1) according to any preceding claim, wherein said removal element (7) is constrained at said first opening (20).

7. Device (1) according to the preceding claim, wherein said rod (4) has development predominantly along said longitudinal axis (1a).

8. Device (1) according to any of the previous claims, wherein said container (2) defines a cavity (22) and comprises an opening portion (23) having a cross-section perpendicular to said longitudinal axis (1a) having dimensions smaller than those of the cross-section perpendicular to said longitudinal axis (1a) of said cavity (22), and said first opening (20) being located in correspondence with said opening portion (23).

9. Device (1) according to the preceding claim, wherein said constraint means (5) are placed in correspondence with said opening portion (23) and said reversible interlocking is performed between said opening portion (23) and said closing portion (3).

10. Device (1) according to any of the previous claims, wherein said gasket (6) is integral with said container (2).

11. Device (1) according to any of the previous claims, wherein said constraint means (5) comprise closure elements (50) protruding from both said interface surfaces (2a, 3a) in a direction perpendicular to said longitudinal axis (1a).
